# EUROPÄISCHE PATENTANMELDUNG

(11) **EP 2 804 139 A1**
(43) Veröffentlichungstag der Anmeldung: **19.11.2014**
(21) Anmeldenummer: 14155002.0
(22) Anmeldetag: 13.02.2014
(51) Int. Cl.: G06Q 10/06, G06Q 50/02

(54) **Serversystem zur Verwaltung von Sequenzen für landwirtschaftliche Arbeitsmaschinen**

(30) Priorität: 16.05.2013 DE 102013008339
(71) Anmelder: CLAAS Selbstfahrende Erntemaschinen GmbH, 33428 Harsewinkel (DE)
(72) Erfinder: Grevinga, Markus, 48369 Saerbeck (DE); Losch, Michael, 33775 Versmold (DE); Eggenhaus, Georg, 48369 Saerbeck (DE); Klüber, Victor, 33378 Rheda-Wiedenbrück (DE); Jeppe, Eckehardt, 34289 Zierenberg (DE); Brill, Volker, 33758 Schloß-Holte (DE)

(57) **Zusammenfassung**

Die Erfindung betrifft ein Serversystem zur Verwaltung von Sequenzen (4a-d) für landwirtschaftliche Arbeitsmaschinen (2a,b,3a,b), wobei die Sequenzen (4a-d) jeweils eine Abfolge von parametrisierten Prozessschritten (5a-f) von Arbeitsgeräten (6a-f) einer landwirtschaftlichen Arbeitsmaschine (2a,b,3a,b) umfassen, umfassend einen Server (1) mit einer Datenbank (8), in welcher ein Sequenzbestand (9) von Sequenzen (4a-d) hinterlegt ist, wobei den Sequenzen (4a-d) des Sequenzbestands (9) jeweils Sequenzkennzeichen (10a-i) zugewiesen sind, wobei die Sequenzkennzeichen (10a-i) einen oder mehrere Prozessschritte (5a-f) der jeweiligen Sequenz (4a-d) beschreiben, mit einer Netzwerkschnittstelle (11) zu einem globalen Kommunikationsnetzwerk (12,12a), welche Netzwerkschnittstelle (11) dazu eingerichtet ist, Verbindungsanfragen eines Clients (13a-d) anzunehmen und einen verbindungsorientierten, bidirektionalen Datenkanal (14) zwischen dem Server (1) und dem Client (13a-d) herzustellen, wobei der Server (1) dazu eingerichtet ist, ein Auswahlkriterium (15) von dem Client (13a-d) über den Datenkanal (14) zu empfangen, eine Sequenz (4a) aus dem Sequenzbestand (9) basierend auf einem Vergleich des Auswahlkriteriums (15) mit den Sequenzkennzeichen (10a-i) der Sequenzen (4a-d) des Sequenzbestands (9) zu bestimmen und die bestimmte Sequenz (4a) an den Client (13a-d) über den Datenkanal (14) zu übertragen. Die Erfindung betrifft ebenso eine entsprechende Kontrollvorrichtung zur Verarbeitung von Sequenzen für landwirtschaftliche Arbeitsmaschinen (2a,b,3a,b).

## Beschreibung

Die Erfindung betrifft ein Serversystem zur Verwaltung von Sequenzen für landwirtschaftliche Arbeitsmaschinen mit den Merkmalen des Anspruchs 1 sowie eine Kontrollvorrichtung zur Verarbeitung von Sequenzen für landwirtschaftliche Arbeitsmaschinen mit den Merkmalen des Anspruchs 12.

Landwirtschaftliche Arbeitsmaschinen werden regelmäßig mit einer Reihe von entweder fest angebauten oder angekoppelten Arbeitsgeräten eingesetzt, welche zur Ausführung verschiedener Arbeitsschritte vorgesehen sind, oder gar als Zug miteinander verbundener Arbeitsmaschinen. Dabei ist es ebenfalls bekannt, die Ansteuerung der landwirtschaftlichen Arbeitsmaschine und der Arbeitsgeräte durch eine auf ihr angeordnete Kontrollvorrichtung, also etwa eine elektronische Steuereinheit, durchführen zu lassen.

Häufig ist es so, dass die landwirtschaftliche Arbeitsmaschine einen Feldbestand abarbeitet und bei Erreichen der Begrenzung des Feldbestands in das Vorgewende tritt, wo nun eine bestimmte Abfolge von Steuervorgängen an den Arbeitsgeräten vorgenommen werden muss, die von der individuellen Bestückung der landwirtschaftlichen Arbeitsmaschine mit Arbeitsgeräten sowie von verschiedenen, jeweils spezifischen Randbedingungen abhängt. Dabei ist aber diese Abfolge von Steuervorgängen für eine bestimmte Ausstattung der landwirtschaftlichen Arbeitsmaschine mit Arbeitsgeräten sowie einer vorgegebenen Art von Feldbestand und Vorgewende häufig wiederkehrend gleich.

Aus dem Stand der Technik, etwa der als nächstkommend angesehenen DE 102 50 694, ist es nun bekannt, die elektronische Steuereinheit so auszubilden, dass eine wiederholt von einem Bediener eingegebene Abfolge von Steuervorgängen automatisch erkannt und als gelernte Sequenz von Prozessschritten des landwirtschaftlichen Arbeitsmaschine und seiner Arbeitsgeräte abgespeichert wird. Eine auf diese Art gelernte Sequenz von Prozessschritten kann dann mittels eines einfachen Knopfdrucks von dem Bediener wieder aufgerufen werden oder gar automatisch in Abhängigkeit von einer bestimmten Position der Arbeitsmaschine im Feldbestand oder Vorgewende ausgelöst werden. Ferner ist aus dem Stand der Technik bekannt, solche Sequenzen auch außerhalb und fern von der Steuereinheit, zum Beispiel an einem stationären Rechner des jeweiligen landwirtschaftlichen Betriebs, welcher als Hof-Personalcomputer (PC) bezeichnet werden kann, weiter zu bearbeiten und zu analysieren. Auf diese Weise kann eine gleichsam fast schon ,,ins Rückenmark" übergegangene Erfahrung des Bedieners der landwirtschaftlichen Arbeitsmaschine bei der manuellen Eingabe von Steuervorgängen zur Erzeugung einer entsprechenden Sequenz von Prozessschritten mit den richtigen Parametern benutzt werden.

Nachteilig an diesem Stand der Technik ist jedoch, dass dieser Lemeffekt, bei dem Wissen und Fertigkeit eines menschlichen Bedieners elektronisch erfasst und weiterverarbeitet werden, nur einem verhältnismäßig kleinen Kreis von Nutzem zur Verfügung gestellt wird. In der oben beschriebenen Konstellation wird eine solch generierte Sequenz von Prozessschritten wohl nur auf Feldern desselben landwirtschaftlichen Betriebs eingesetzt werden und ein Austausch mit anderen Besitzern einer landwirtschaftlichen Arbeitsmaschine mit einer ähnlichen Steuereinheit wird allenfalls sporadisch und nicht systematisch stattfinden können.

Das der Erfindung zugrundeliegende Problem besteht nun darin, ein System zur Verwaltung von solchen Sequenzen für landwirtschaftliche Arbeitsmaschinen weiterzuentwickeln und zur Verfügung zu stellen, welches wesentlich umfangreichere Synergien zwischen verschiedenen Anwendern und Besitzern von landwirtschaftlichen Arbeitsmaschinen in ähnlich gelagerten Konstellationen ermöglicht.

Diese Aufgabe wird bezogen auf ein Serversystem zur Verwaltung von Sequenzen für landwirtschaftliche Arbeitsmaschinen durch die Merkmale des Anspruchs 1 und bezogen auf einen Mobilknoten zur Verarbeitung von Sequenzen für landwirtschaftliche Arbeitsmaschinen durch die Merkmale des Anspruchs 12 gelöst.

Zu den "landwirtschaftlichen Arbeitsmaschinen" im vorliegenden Sinne, welche auch einfach als Arbeitsmaschinen bezeichnet werden, sind sämtliche landwirtschaftlichen Fahrzeuge und aus diesen gebildete Züge mit fest angebauten oder angekoppelten Arbeitsgeräten zu zählen, welche in der Landwirtschaft eingesetzt werden. Insbesondere zählen hierzu Mähdrescher, Feldhäcksler sowie Traktoren mit an diesen befestigten Arbeitsgeräten oder von diesen gezogenen Arbeitsgeräten. Nachfolgend sind mit dem Begriff der Arbeitsmaschinen stets auch die mit der Arbeitsmaschine auf diese Weise gekoppelten Arbeitsgeräte gemeint.

Unter "Sequenzen" sind nachfolgend Abfolgen von Prozessschritten der landwirtschaftlichen Arbeitsmaschinen und speziell der Arbeitsgeräte zu verstehen, welche in der Regel parametrisiert sind. Es handelt sich also um vordefinierte Reihenfolgen von Ansteuerungsbefehlen, bei denen bestimmte Anweisungen mit einer Parametereinstellung für diese speziellen Anweisungen gekoppelt sind. Ein Beispiel hierfür wäre etwa das Hochfahren eines Gebläses auf einen bestimmten Prozentsatz der Maximalleistung.

Erfindungsgemäß ist nun erkannt worden, dass eine quasi-evolutionäre, von den Bedienern getriebene, aber automatisch geförderte Optimierung vieler verschiedener solcher Sequenzen dadurch erreicht werden kann, dass diese Sequenzen auf eine definierte Art und Weise in einem zentralen Server gespeichert und von dort aus weltweit Bedienern landwirtschaftlicher Arbeitsmaschinen, welche solche Sequenzen selbst anwenden oder anwenden könnten, zur Verfügung gestellt werden. Es kann auf diese Weise eine direkte Vergleichbarkeit von Ergebnissen ähnlicher Sequenzen, etwa mit unterschiedlichen Parametern der Prozessschritte, erreicht werden, so dass erkennbar ist, welche Parameter oder sonstige Einstellungen besondere Vorteile bieten. Auf diese Weise kann einem Bediener auch eine Erkenntnis zugutekommen, welche weder er selber noch ein ihm bekannter Bediener ausprobiert hat, sondern welche von einem ihm vollkommen unbekannten und womöglich geografisch weit entfernten Bediener stammt, der aber unter ähnlichen Randbedingungen arbeitet.

Gekoppelt mit der Möglichkeit, aus wiederholt manuell eingegebenen Prozessschritten eine Sequenz lernen zu lassen, wird nun ermöglicht, dass eine globale Selbstoptimierung von Sequenzen und ihnen zugeordneten Parametern der Prozessschritte erreicht wird. Es ist leicht nachzuvollziehen, dass die sich im Ergebnis ergebenden Produktivitätszuwächse potentiell enorm sind, weil der Wissensaustausch in weitestem Maße transparent ermöglicht wird.

Die bevorzugte Ausgestaltung nach Anspruch 3 sieht die bereits erwähnte Möglichkeit vor, eine von einem Bediener - ob nun manuell oder automatisch - generierte Sequenz solcher Prozessschritte direkt von einer der landwirtschaftlichen Arbeitsmaschine zugeordneten Vorrichtung auf einen vorschlagsgemäßen Server hochzuladen.

Die bevorzugte Ausgestaltung nach Anspruch 4 wiederum sieht die Verknüpfung von Sequenzen mit eigenen Verlaufsbeständen vor, also gemessenen oder erzeugten Daten, welche dem Ergebnis einer Abarbeitung der Sequenz entsprechen. Auf diese Weise kann auch eine mögliche Variabilität der Ergebnisse sowie der Grad der Reproduzierbarkeit des Ergebnisses einer Sequenz transparent dargestellt werden.

Einem Bediener wird eine besonders breite Auswahlmöglichkeit dann gegeben, wenn dieser nicht nur die Möglichkeit hat, sich einfach eine von dem Serversystem zur Verfügung gestellte Sequenz herunterzuladen, sondern ihm auch die Möglichkeit gegeben wird, mehrere vorgeschlagener Sequenzen gemäß gewünschter Kriterien anzeigen und vergleichen zu lassen, wie dies gemäß der bevorzugten Ausgestaltungen der Ansprüche 6 und 7 vorgeschlagen wird.

Der Gegenstand des abhängigen Anspruchs 8 bringt wiederum den interessanten Gesichtspunkt ein, dass serverseitig automatisch Abhängigkeiten zwischen Ergebnissen einer Sequenz und ihrer Parametrisierung oder speziellen Umgebungssituationen erkannt werden können. Auf diese Weise können komplexe Sequenzen erstellt werden, bei denen etwa das Vorsehen eines speziellen Prozessschrittes oder die Einstellung der Parameter für diesen Prozessschritt von dem Vorhandensein oder Fehlen gewisser Randbedingungen abhängt. Damit muss also eine Sequenz nicht einfach nur ganz oder gar nicht ausgeführt werden, sondern kann auch solche variablen Abhängigkeiten oder Parametrisierungen vorsehen.

Nach dem Anspruch 9 kann wiederum das Serversystem Kontrollvorrichtungen an Arbeitsmaschinen, von welchen Kontrollvorrichtungen bekannt ist, dass sie etwa eine bestimmte Kombination von Arbeitsgeräten verwenden, benachrichtigen, wenn insbesondere besonders geeignete Sequenzen für diese Kombination in eine Datenbank des Servers aufgenommen werden.

Schließlich sehen die Ansprüche 10 und 11 vor, dass Bedienern ein berechtigungsabhängiger Grad der Funktionalität durch das Serversystem zur Verfügung gestellt wird.

Die lediglich ein Ausführungsbeispiel wiedergebende Zeichnung zeigt in der
- Fig. 1: eine Übersicht über ein System zur Verwaltung von Sequenzen für landwirtschaftliche Arbeitsmaschinen mit einem vorschlagsgemäßen Serversystem sowie einer entsprechenden vorschlagsgemäßen Kontrollvorrichtung,
- Fig. 2: die Darstellung einer Sequenz als Abfolge von parametrisierten Prozessschritten einer landwirtschaftlichen Arbeitsmaschine im Sinne des Vorschlags,
- Fig. 3: die Übertragung einer Sequenz wie aus der Fig. 2 von einem vorschlagsgemäßen Serversystem an eine vorschlagsgemäße Kontrollvorrichtung,
- Fig. 4: die Bedienoberfläche einer vorschlagsgemäßen Kontrollvorrichtung mit einer angezeigten Sequenz sowie zugeordneten Parametern und
- Fig. 5: die Bedienoberfläche einer vorschlagsgemäßen Kontrollvorrichtung, welche eine Auswahlliste von Sequenzen anzeigt, die gemäß der Reihenfolge einer Ergebnismetrik sortiert wurden.

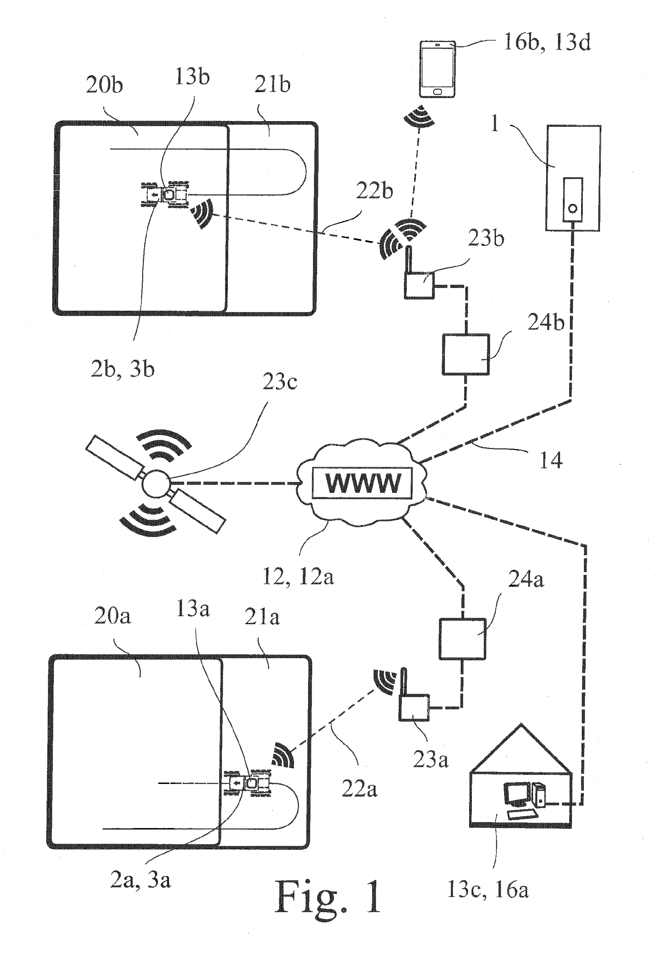

Fig. 1 zeigt im Überblick ein vorschlagsgemäßes Serversystem mit einem Server 1 sowie zwei landwirtschaftlichen Arbeitsmaschinen 2a,b, bei welchen es sich hier beispielhaft um Feldhäcksler 3a,b handeln soll.

Dieses Serversystem dient der Verwaltung von Sequenzen 4a-d für landwirtschaftliche Arbeitsmaschinen 2a,b, wobei die Sequenzen 4a-d jeweils eine Abfolge von parametrisierten Prozessschritten 5a-f von Arbeitsgeräten 6a-f einer landwirtschaftlichen Arbeitsmaschine 2a,b umfassen.

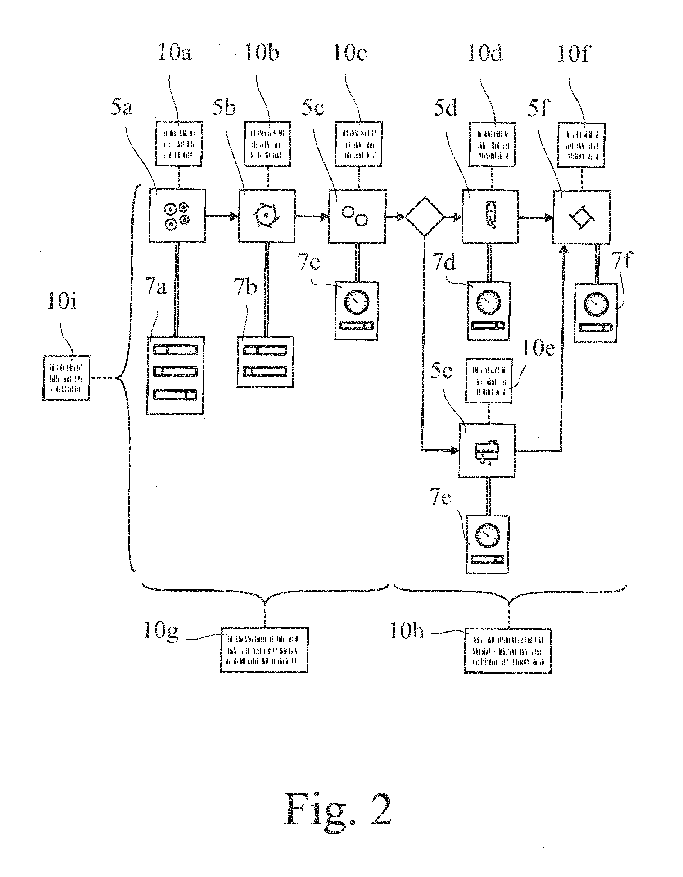

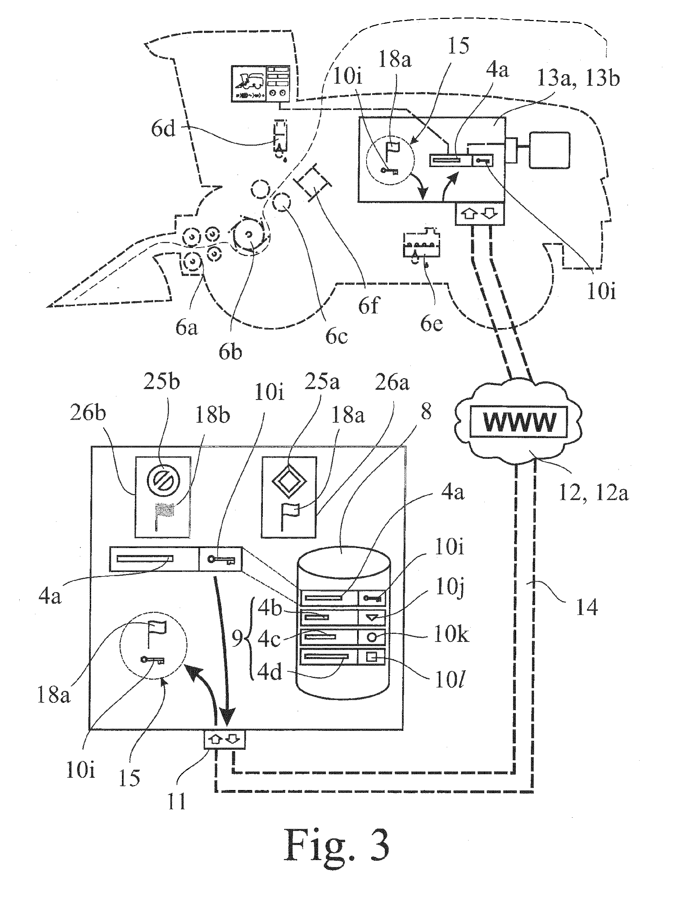

In der Fig. 2 ist eine solche Sequenz 4a genauer dargestellt. Die Sequenz 4a besteht aus den Prozessschritten des Einziehens 5a des Häckselns 5b, des Knackens 5c, des Bemengens 5d,e sowie des Auswerfens 5f. Im vorliegenden Beispiel soll diese Sequenz 4a von einem Feldhäcksler 3a,b durchgeführt werden, was hier allerdings nur beispielhaft und nicht einschränkend zu verstehen ist. Dabei sind die den Prozessschritten zugeordneten Arbeitsgeräte 6a-f in der Fig. 3 schematisch wiedergegeben.

Den Prozessschritten 5a-f ist dabei jeweils ein Parametersatz 7a-f zugeordnet, welcher Parametersatz 7a-f den jeweiligen Prozessschritt 5a-f beschreibt. Beispielhaft sind hier eine Motorleistung, eine Ausfahrlänge oder speziell für den Prozessschritt 5b des Häckselns eine Schnittlänge als mögliche Bedeutung eines Parameters des Parametersatzes 7a-f zu nennen. Auch die Zeitdauer der Ausführung eines Prozessschritts 5a-f und also die Zeit bis zum jeweils nächsten Prozessschritt kann als Parameter eines Parametersatzes 7a-f in diesem Sinne verstanden werden.

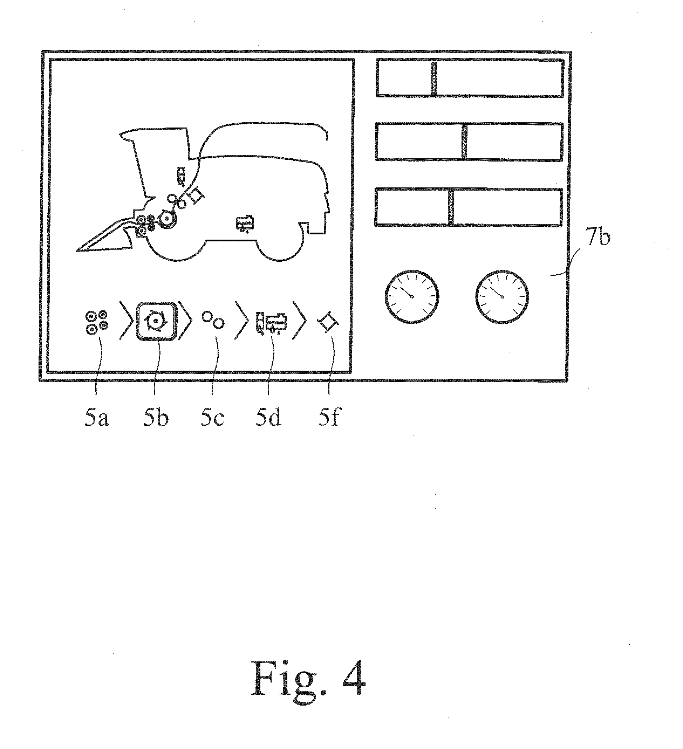

In der Fig. 4 ist der Parametersatz 7b für den Prozessschritt 5b des Häckselns 5b beispielhaft grafisch wiedergegeben.

Der Server 1 des vorschlagsgemäßen Serversystems umfasst nun eine Datenbank 8, in welcher ein Sequenzbestand 9 von Sequenzen 4a-d hinterlegt ist. Es handelt sich also beim Server 1 um ein im Prinzip beliebiges Computersystem, welches auch aus verschiedenen individuellen Computern bestehen kann, mit einer Datenbank 8, welche relational, objektorientiert oder sonst wie ausgestaltet sein kann und in welcher die Sequenzen 4a-d als Sequenzbestand 9 gespeichert sind.

Vorschlagsgemäß sind dabei den Sequenzen 4a-d des Sequenzbestands 9 jeweils Sequenzkennzeichen 10a-i zugewiesen, wobei die Sequenzkennzeichen 10a-i ein oder mehrere Prozessschritte 5a-f der jeweiligen Sequenz 4a-d beschreiben.

In diesem Zusammenhang zeigt die Fig. 3 zunächst schematisch den Server 1 mit der Datenbank 8 und dem Sequenzbestand 9, wobei den Sequenzen 4a-d hier jeweils nur ein symbolhaft gekennzeichnetes Sequenzkennzeichen 10i-1 zugewiesen ist. Die Sequenzkennzeichen 10i-1 beschreiben die Sequenzen 4a-d als Ganzes und also jeden Prozessschritt der jeweiligen Sequenz 4a-d.

Aus der Fig. 2 geht aber insbesondere hervor, dass die Sequenzkennzeichen 10a-i sich nicht nur auf die Sequenz 4a-d als Ganzes, sondern auch - nur - auf ein oder mehrere Prozessschritte 5a-f der jeweiligen Sequenz beziehen können. So ist zu erkennen, dass die Sequenzkennzeichen 10a-f sich jeweils nur auf den entsprechenden Prozessschritt 5a-f beziehen und lediglich diesen beschreiben. Speziell im Fall eines nur auf einen Prozessschritt bezogenen Sequenzkennzeichens 10a-f kann es sein, dass ein solches Sequenzkennzeichen 10a-f den entsprechenden Parametersatz 7a-f umfasst oder gar aus diesem besteht.

Das Sequenzkennzeichen 10g wiederum ist den Prozessschritten 5a,b,c und das Sequenzkennzeichen 10h den Prozessschritten 5d,e,f zugordnet und beschreibt diese. Schließlich ist - in Übereinstimmung mit der Darstellung der Fig. 3 - das Sequenzkennzeichen 10i der gesamten Sequenz 4a und damit allen ihren Prozessschritten 5a-f zugewiesen und beschreibt diese. Die Sequenzkennzeichen 10a-i können also ein, mehrere oder alle Prozessschritte 5a-f der jeweiligen Sequenz 4a-d beschreiben.

Vorschlagsgemäß weist der Server 1 ferner eine Netzwerkschnittstelle 11 zu einem globalen Kommunikationsnetzwerk 12 auf, wobei diese Netzwerkschnittstelle 11 dazu eingerichtet ist, Verbindungsanfragen eines Clients 13a-d anzunehmen und einen verbindungsorientierten, bidirektionalen Datenkanal 14 zwischen dem Server 1 und dem Client 13a-d herzustellen. Bei der Netzwerkschnittstelle 11 kann es sich insbesondere um eine in Software implementierte derartige Schnittstelle handeln, welche etwa Zugang zu einem Ethernet-Netzwerk ermöglicht. Bei dem globalen Kommunikationsnetzwerk 12 kann es sich insbesondere um das Internet 12a handeln. Auch der Begriff des Clients 13a-d ist im Sinne des Vorschlags weit auszulegen und bezieht sich auf jedwede in Software und/oder Hardware gebildete Entität, welche Verbindungsanfragen an die Netzwerkschnittstelle 11 richtet und mit der ein, vorzugsweise verbindungsorientierter, bidirektionaler Datenkanal 14 zwischen dem Server 1 und ihm hergestellt werden kann.

Unter einem bidirektionalen Datenkanal 14 kann etwa eine Verbindung im Sinne eines aus der Internettechnik bekannten "Sockets" zwischen dem Server 1 und dem Client 13a-d und speziell eine Verbindung gemäß HTTP (Hypertext Transfer Protocol) oder FTP (File Transfer Protocol) verstanden werden, welche beide durch ihre Protokollschicht des TCP (Transmission Control Protocol) verbindungsorientiert sind. Aber ebenso könnte eine Kommunikation zwischen dem Client 13a-d und dem Server 1, welche auf UDP (User Datagram Protocol) basiert und auf einer höheren Protokollebene, etwa der Applikationsebene, eine Verbindung implementiert als verbindungsorientierter bidirektionaler Datenkanal 14 im vorliegenden Sinne verstanden werden. Gleiches gilt, wenn etwa zwei oder mehr "Sockets" im netzwerktechnischen Sinne, deren jeweilige Endpunkte im selben Gerät angeordnet sind, für die Kommunikation verwendet werden und einige dieser grundsätzlich bidirektionalen Sockets nur in einer Richtung benutzt werden. In diesem Falle bilden alle solchen Sockets insgesamt einen bidirektionalen Datenkanal 14 im Sinne des Vorschlags. "Verbindungsorientiert" bedeutet in diesem Zusammenhang, dass der Zustand einer bestehenden Verbindung zwischen dem Client 13a,b und dem Server 1 softwaretechnisch eingenommen und nach Trennen der Verbindung, eventuell auch nach Zeitablauf, wieder verlassen wird. Die Fig. 1 und 3 zeigen einen verbindungsorientierten bidirektionalen Datenkanal 14 schematisch.

Vorschlagsgemäß ist nun der Server 1 dazu eingerichtet, ein Auswahlkriterium 15 von dem Client 13a-d über den Datenkanal 14 zu empfangen. Weiter ist vorschlagsgemäß der Server 1 dazu eingerichtet, eine Sequenz 4a aus dem Sequenzbestand 9 basierend auf einem Vergleich des Auswahlkriteriums 15 mit den Sequenzkennzeichen 10a-i der Sequenzen 4a-d des Sequenzbestands 9 zu bestimmen und die bestimmte Sequenz 4a an den Client 13a-d über den Datenkanal 14 zu übertragen. Dies schließt den Fall ein, dass mehr als eine Sequenz 4a-d bestimmt und übertragen wird.

Dieser Sachverhalt ist in der Fig. 3 gezeigt, in welcher das Auswahlkriterium 15 mit einem Schlüssel als symbolhaftem Bestandteil dargestellt wird. Das Auswahlkriterium 15 wird also von dem Server 1 empfangen und durch einen Vergleich mit den Sequenzkennzeichen 10i-1 im Sequenzbestand 9 genau diejenige Sequenz 4a bestimmt, welche hier das zum Symbol des Auswahlkriteriums 15 identische Sequenzkennzeichen 10i entsprechend einem Schlüssel aufweist. Dabei ist der vorschlagsgemäße Vorgang des Vergleichs nicht auf die Bestimmung einer Identität, wie in diesem Beispiel beschrieben, beschränkt, sondern kann irgendein Entscheidungskriterium umfassen, welches sowohl das Auswahlkriterium 15 als auch die Sequenzkennzeichen 10a-i berücksichtigt. Vereinfacht ausgedrückt stellt also der Client 13a-d ein Auswahlkriterium 15 zur Verfügung, auf dessen Grundlage der Server 1 aus seinem Sequenzbestand 9 die Sequenz 4a mit dem entsprechenden Sequenzkennzeichen 10i bestimmt und an den Client 13a-d über den Datenkanal 14 überträgt.

Bei dem Client 13a-b kann es sich nun einerseits um ein elektronisches Steuergerät handeln, welches auch als Kontrollvorrichtung bezeichnet wird. In diesem Fall wird die Sequenz 4a durch die landwirtschaftliche Arbeitsmaschine 2a, an welcher die Kontrollvorrichtung angeordnet ist, ausgeführt. Es kann sich aber auch bei dem Client 13 c um einen stationären Rechner eines landwirtschaftlichen Betriebes, einem sogenannten Hof-Personalcomputer 16a handeln, in welchem die Sequenz 4a nicht sofort umgesetzt wird, sondern möglicherweise nur gespeichert oder aber bearbeitet wird. Ebenso kann es sich bei dem Client 13d um ein mobiles elektronisches Gerät handeln, was untenstehend ebenfalls noch ausführlicher beschrieben wird.

Bevorzugte Beispiele von Sequenzkennzeichen 10a-i werden nun vorgestellt. Die Sequenzkennzeichen 10a-i können eine Funktionseigenschaft umfassen, worunter etwa ein Arbeitsgerätetyp und weiter insbesondere eine Arbeitsgeräteidentifikation zu verstehen sind. Als Arbeitsgerätetyp wäre etwa der Typus "Gebläse" zu verstehen, wobei die Arbeitsgeräteidentifikation entweder die Art des Arbeitsgeräts 6a-f im Sinne einer Modellnummer oder sogar eine Produktionsseriennummer des Arbeitsgeräts 6a-f angeben kann. Die Sequenzkennzeichen 10a-i können auch eine Parametereinstellung eines Arbeitsgeräts 6a-f umfassen, was etwa - wie bereits beschrieben - den Parametersätzen 7a-f der Prozessschritte 5a-f entsprechen kann. Ferner können die Sequenzkennzeichen 10a-i eine Sensoreinstellung umfassen, worunter etwa optische oder Feuchtigkeitssensoren an der landwirtschaftlichen Arbeitsmaschine 2a,b,3a,b zu verstehen sind. Ferner können die Sequenzkennzeichen 10a-i eine Teilnehmerkennung 18a-c umfassen, wobei diese Teilnehmerkennung 18a-c etwa eine Personenidentifikation sein kann, die die Person eines Bedieners identifiziert oder eine Client-Identifikation sein kann, die einen speziellen Client 13a-d als Instanz eines Kommunikationsknotens in einem Netzwerk, unabhängig von der jeweiligen Person des Bedieners, identifiziert.

Ein Sequenzkennzeichnen 10i im Sinne des Vorschlags könnte auch eine landwirtschaftliche Arbeitsmaschine 2a,b insgesamt bezeichnen. Wahlweise werden damit entweder auch die Arbeitsgeräte 6a-f der landwirtschaftlichen Arbeitsmaschine 2a,b unmittelbar identifiziert oder es kann eine Zuordnung des Sequenzkennzeichens 10i zu weiteren Sequenzkennzeichen 10a-e bestehen, welche jeweils für sich ein Arbeitsgerät 6a-f der landwirtschaftlichen Arbeitsmaschine 2a,b identifizieren. Ein solches, eine landwirtschaftliche Arbeitsmaschine 2a,b bezeichnendes Sequenzkennzeichen 10i kann insbesondere als eine Funktionseigenschaft umfassend angesehen werden. Nachfolgend wird es als Arbeitsmaschinenkennzeichen bezeichnet.

Daneben können die Sequenzkennzeichen 10a-i auch eine Einsatzumgebungseigenschaft umfassen, worunter etwa die Bestimmung der Sequenz 4a-d für den Einsatz in einer bestimmten Umgebung oder mit einer bestimmten Randbedingung zu verstehen ist. Beispielsweise könnte es sich um eine bestimmte Art von Getreide handeln, die mit der Sequenz 4a-d bearbeitet oder abgeerntet werden soll.

Die einer Sequenz 4a-d zugeordneten Sequenzkennzeichen 10a-i können aber auch grundsätzlich verlaufsbezogene Daten umfassen. In diesem Sinne könnten zu den Einsatzumgebungseigenschaften auch ermittelte Werte nach oder während der Ausführung einer solchen Sequenz 4a-d gezählt werden. Hierzu zählen insbesondere Sensordaten, also einmalig, kontinuierlich oder periodisch erfasste Messwerte von Sensoren während der Ausführung der Sequenz 4a-d oder aber ein Arbeitsergebnis, was z. B. eine geerntete Menge angibt. Dieses Arbeitsergebnis kann insbesondere eine Ergebnismetrik 17a-c sein, welche eine quantitative Aussage über die erreichte Leistung zwecks Vergleichbarkeit liefert. Also müssen die auf eine Sequenz 4a-d und die auf sie bezogene und ihr also zugewiesenen Sequenzkennzeichen 10a-i nicht nur auf Sollwerte beschränkt sein, sondern können auch Ergebniswerte von einem oder mehreren Durchläufen als Bestandteil der Sequenzkennzeichen 10a-i umfassen. Die ebenfalls mögliche Trennung dieser Verlaufsdaten von den Sequenzkennzeichen 10a-i in eine getrennte Datenstruktur wird untenstehend als weitere vorgesehene Möglichkeit noch genauer beschrieben.

Damit ein möglichst großer Sequenzbestand 9 aus einer Vielfalt von Quellen aufgebaut werden kann, ist bevorzugt vorgesehen, dass der Server 1 dazu eingerichtet ist, eine bedienergenerierte Frequenz 4a-d, welcher ein Sequenzkennzeichen 10a-i zugewiesen ist, von einem Client 13a-d über den Datenkanal 14 zu empfangen und dem Sequenzbestand 9 hinzuzufügen. Der Server 1 übermittelt also nicht nur Sequenzen 4a-d, wie bereits beschrieben, an einen Client 13a-d, sondern nimmt auch neue Sequenzen 4a-d von diesem entgegen. Indem der Server 1 sie in seinen Sequenzbestand 9 aufnimmt, wird die jeweilige Sequenz 4a-d automatisch grundsätzlich auch anderen Clients 13a-d zugänglich gemacht. Auf diese Weise tritt ein systemweiter Lerneffekt ein, weil der Bestand an Sequenzen 4a-d durch ihre jeweiligen Sequenzkennzeichen 10a-i systematisch erfasst wird.

Wie bereits angedeutet, ist bevorzugt vorgesehen, dass neben den Sequenzen 4a-d und ihren Sequenzkennzeichen 10a-i auch separate Datensätze, die sich aus der Ausführung der Sequenzen 4a-d ergeben, vorgehalten werden. Dementsprechend ist bevorzugt vorgesehen, dass in der Datenbank 8 ein - in der Zeichnung nicht wiedergegebener - Verlaufsbestand von landwirtschaftlichen Verlaufsdaten hinterlegt ist, welche vorzugsweise eine Einsatzumgehungseigenschaft und/oder ein Arbeitsergebnis wie bereits oben beschrieben, umfassen.

Vorgesehen ist vorzugsweise, dass diesen Verlaufsdaten jeweils ein Verlaufskennzeichen zugewiesen ist, wobei weiter bevorzugt den Verlaufsdaten jeweils eine Sequenz 4a-d des Sequenzbestands 9 zugewiesen ist. Es ist also speziell diejenige Sequenz 4a-d zugeordnet, aus deren Ausführung sich die Verlaufsdaten ergeben haben. Diese bevorzugte Ausführungsform sieht weiter vor, dass der Server 1 dazu eingerichtet ist, ein Verlaufskriterium, welches vorzugsweise eine Teilnehmerkennung 18a-c im oben beschriebenen Sinne umfasst, von dem Client 13a-d über den Datenkanal 14 zu empfangen, Verlaufsdaten aus dem Verlaufsbestand basierend auf einem Vergleich des Verlaufskriteriums mit den Verlaufskennzeichen des Verlaufsbestands zu bestimmen und die bestimmten Verlaufsdaten an den Client 13a-d über den Datenkanal 14 zu übertragen.

Es handelt sich also um eine Zugriffsmöglichkeit seitens des Clients 13a-d auf den Verlaufsbestand im Server 1, welche analog zu der Zugriffsmöglichkeit auf die Sequenzen 4a-d mit Hilfe eines Sequenzkennzeichens 10a-i funktioniert, nur hier statt dem Sequenzkennzeichen 10a-i ein Verlaufskennzeichen vorsieht. Auf diese Weise wird es dem Client 13a-d ermöglicht, für eine bestimmte Sequenz 4a-d auch die sich durch diese Sequenz 4a-d ermittelten Ergebniswerte zu verschaffen, sofern diese nicht schon in der Sequenz oder in einem der Sequenz zugewiesenen Sequenzkennzeichen 10a-i selber mit abgelegt sind.

Die vorschlagsgemäße Bestimmung einer Sequenz 4a-d aus dem Sequenzbestand 9 basierend auf einem Vergleich des Auswahlkriteriums 15 mit den Sequenzkennzeichen 10a-i der Sequenzen 4a-d des Sequenzbestands 9 lässt sich besonders dann einfach verwirklichen, wenn gemäß einer bevorzugten Ausführung das Auswahlkriterium 15 ein Sequenzkennzeichen 10a-i umfasst. Bevorzugte Ausgestaltungen dieses von dem Auswahlkriterium 15 umfassten Sequenzkennzeichens 10a-i entsprechen den bereits obenstehend beschriebenen bevorzugten Ausgestaltungen des Sequenzkennzeichens 10a-i.

Wenn dann das Auswahlkriterium 15 ein oben beschriebenes Arbeitsmaschinenkennzeichen ist, also ein Sequenzkennzeichen 10i, welches eine landwirtschaftliche Arbeitsmaschine 2a,b insgesamt bezeichnet, dann kann der Vergleich eines solchen Auswahlkriteriums 15 mit den Sequenzkennzeichen 10a-i der Sequenzen 4a-d des Sequenzbestand 9 einer Filterung nach denjenigen Sequenzen 4a-d entsprechen, welche genau die Arbeitsgeräte 6a-f der jeweiligen Arbeitsmaschine 2a,b betreffen. Dies kann deswegen sinnvoll sein, weil etwa für einen Mähdrescher andere Sequenzen 4a-d von Interesse sind als für einen Feldhäcksler und umgekehrt.

Es kann sein, dass es seitens des Servers 1 als Reaktion auf den Empfang eines Auswahlkriterium 15 von dem Client 13a-d sinnvoll ist, nicht nur eine einzelne Sequenz 4a an den Client 13a-d über den Datenkanal 14 mit allen zugehörigen Daten zu übertragen, sondern dem Client 13a-d vorab eine Auswahlliste 19, also eine Reihe von Sequenzen 4a-d vorzustellen, aus der dann ggf. die Auswahl einer einzelnen Sequenz 4a-d vorgenommen werden kann. Zu diesem Zweck kann also der Server 1 bevorzugt dazu eingerichtet sein, eine Auswahlliste 19 von Sequenzen 4a-d aus dem Sequenzbestand 9 basierend auf einem Vergleich des empfangenen Auswahlkriteriums 15 mit Sequenzkennzeichen 10i-1 der Sequenzen 4a-d des Sequenzbestands 9 zu bestimmen, eine Übersicht zu dieser Auswahlliste 19 zu erzeugen und die Übersicht an den Client 13a-d über den Datenkanal 14 zu übertragen. Eine solche Übersicht umfasst eine grundsätzlich beliebige Teilmenge der Informationen aus den Sequenzen 4a-d der Auswahlliste 19. Vorteilhafterweise ergibt sich also eine kompakte Zusammenfassung der wesentlichen Charakteristiken der Sequenzen 4a-d der Auswahlliste 19, welche dann eine Beurteilung auf Seiten des Clients 13a-d über die Sequenzen 4a-d der Auswahlliste 19 ermöglicht. Dabei kann die Übersicht auch diejenigen Daten der Sequenzen 4a-d umfassen, welche durch das empfangene Auswahlkriterium 15 spezifiziert wurden und also von besonderem Interesse sind. Damit wird dem Umstand Rechnung getragen, ob für den Client 13a-d etwa eine besondere Ergebnismetrik 17a-c oder aber eine bestimmte Randbedingung, wie etwa ein besonders trockener oder nasser Boden ausschlaggebend ist.

Die Bestimmung der Auswahlliste 19 von Sequenzen 4a-d kann vorteilhafterweise auf einen Vergleich eines Arbeitsgerätetyps und/oder einer Einsatzumgebungseigenschaft im oben beschriebenen Sinne des empfangenen Auswahlkriteriums 15 einerseits und der Sequenzkennzeichen 10i-1 der Sequenzen 4a-d des Sequenzbestands 9 andererseits basieren. Dieser Vergleich kann insbesondere die Feststellung einer Gemeinsamkeit im Sinne einer Identität umfassen.

Hierauf aufbauend ist besonders bevorzugt, dass diese Auswahlliste 19 gemäß einer Reihenfolge sortiert ist, wobei die Reihenfolge auf einem weiteren Sequenzkennzeichen 10a-i basiert. Dieses weitere Sequenzkennzeichen 10a-i umfasst vorzugsweise eine Ergebnismetrik 17a-c. Auf diese Weise kann über das Auswahlkriterium 15 der Client 13a-d etwa eine Auswahlliste 19 von Sequenzen 4a-d anfordern, welche alle für eine bestimmte Getreideart und eine bestimmte Feldgeometrie vorgesehen sind. Indem nun eine Auswahlliste 19 von Sequenzen 4a-d bereitgestellt wird, welche nach einer Ergebnismetrik 17a-c in einer Rangfolge aufgeführt werden, ist clientseitig schnell zu erfassen, welche Sequenzen 4a-d gemäß der gewünschten Art der Ergebnismetrik 17a-c besonders vielversprechend und also geeignet sind. Dabei kann die Art der Ergebnismetrik 17a-c von Client 13a-d zu Client 13a-d unterschiedlich sein. Es mag die Vollständigkeit der Bearbeitung oder die Geschwindigkeit der Bearbeitung oder die Reinheit des Ergebnisses jeweils von Interesse sein.

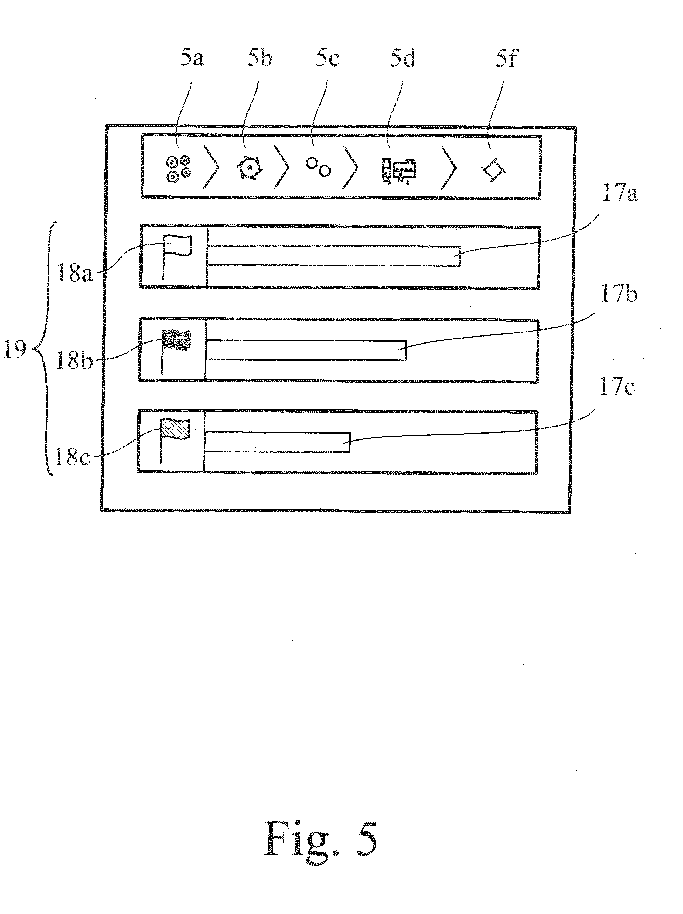

Die Fig. 5 zeigt eine mögliche Darstellung einer solchen Auswahlliste 19 bei einem Client 13a-d. Diese Darstellung kann etwa auf einem Bildschirm des Client 13a-d erfolgen. Die obere Zeile stellt die Sequenz 4a mit den Prozessschritten des Einziehens 5a, des Häckselns 5b, des Knackens 5c, des Bemengens 5d sowie des Auswerfens 5f dar. Diese Prozessschritte 5a-d,f könnten etwa dem Auswahlkriterium 15 des Client 13a-d entsprochen haben, bei in welchem Sequenzkennzeichen 10a-f spezifiziert wurden, welche genau diese Schritte charakterisieren durch ihren jeweiligen Arbeitsgerätetyp und also eine jeweilige Funktionseigenschaft vorgeben.

Gemäß der Darstellung der Fig. 5 wird nun eine Auswahlliste 19 aus drei Einträgen - also Sequenzen 4a-c - präsentiert, wobei die jeweilige Sequenz 4a-c selbst nicht, sondern lediglich Teilnehmerkennungen 18a-c sowie Ergebnismetriken 17a-c dargestellt werden. Es wurden also drei Sequenzen 4a-c ermittelt, welche jeweils einem anderen Teilnehmer zugeordnet sind und welche eine jeweils unterschiedliche Ergebnismetrik 17a-c geliefert haben. Diese Ergebnismetrik 17a-c kann z. B. einen prozentualen Gradmesser der Gründlichkeit der Abarbeitung der jeweiligen Sequenz 4a-c liefern.

In dieser Auswahlliste 19 ist die oberste Sequenz 4a des Teilnehmers mit der Teilnehmerkennung 18a mit der höchsten Ergebnismetrik 17a dargestellt. Basierend hierauf kann der Client 13a-d nun etwa die Entscheidung treffen, die Sequenz 4a anzufordern, welcher in der dargestellten Auswahlliste 19 der Teilnehmerkennung 18a und der Ergebnismetrik 17a entspricht, da diese offenbar hinsichtlich der interessanten Ergebnismetrik 17a-c den anderen Sequenzen 4b-c überlegen ist.

Um noch einmal den sich hieraus ergebenden Lerneffekt zu verdeutlichen, sei wiederum auf die Übersicht der Fig. 1 hingewiesen. Erkennbar sind die landwirtschaftlichen Arbeitsmaschinen 2a und 2b in einem jeweils ähnlich gelagerten Feldbestand 20a,b mit einem ebenfalls ähnlichen Vorgewende 2 1 a,b im Einsatz. Die landwirtschaftliche Arbeitsmaschine 2b ist aber schon weiter in der Bearbeitung fortgeschritten als die landwirtschaftliche Arbeitsmaschine 2a. Der der Arbeitsmaschine 3b zugeordnete Client 13b hat bereits eine bestimmte Sequenz 4a ausgeführt und diese Sequenz 4a an den Server 1 übertragen, welcher sie in seinen Sequenzbestand 9 aufgenommen hat. Die Kommunikation mit dem Server 1 erfolgte über eine drahtlose Verbindung 22b zu einer Basisstation 23b, welche mit einem Gateway 24b in Kommunikation steht, das wiederum an das Internet 12a angeschlossen ist.

Der Client 13a der Arbeitsmaschine 2a wiederum steht ebenfalls über eine drahtlose Verbindung 22a mit einer Basisstation 23a in Kommunikation und hat über das Gateway 24a ebenfalls eine Verbindung zum Internet 12a. Alternativ kann auch der Client 13a eine anderweitige, direkte Anbindung an das Internet 12a aufweisen, was in der Fig. 1 exemplarisch durch einen Satelliten 23c angedeutet wird. Wenn der Client 13a der Arbeitsmaschine 2a nun ein Auswahlkriterium 15 an den Server 1 schickt, welches speziell diejenigen Sequenzkennzeichen 10a-i, und zwar hier Funktionseigenschaften, umfasst, die die für das Feld 20a und das Vorgewende 21a notwendigen Prozessschritte 5a-f definiert, dann kann der Server 1 bei der Erstellung seiner Auswahlliste 19 auch auf die kommend von dem Client 13b der Arbeitsmaschine 2b durch den Server 1 empfangene Sequenz 4a im Sequenzbestand 9 zugreifen. Falls diese Sequenz 4a sich nach einem von dem Client 13a der Arbeitsmaschine 2a definierten Kriterium, welches ebenfalls als Sequenzkennzeichen 10i des Auswahlkriteriums 15 an den Server 1 übertragen wurde, als besonders geeignet erweist, dann kann der Client 13a der Arbeitsmaschine 2a auf diese Sequenz 4a zugreifen, sie nach Erhalt vom Server 1 ausführen und von den guten, bereits erzielten Ergebnissen der Arbeitsmaschine 2b unmittelbar profitieren.

Dabei müssen die Sequenzen 4a-d nicht notwendigerweise aus einer rigiden Abfolge bestehen. Die Sequenzen 4a-d können vielmehr auch eine Komplexität aufweisen, welche über eine starre Abarbeitung nach vorgegebenen Parametersätzen 7a-f hinausgeht. Dabei ist bevorzugt, dass die Sequenzen 4a-d gemäß einer Sequenzsyntax formatiert sind, wobei die Sequenzsyntax funktionale Abhängigkeiten zwischen parametrisierten Prozessschritten 6a-f und/oder Kontrollstrukturen 25 innerhalb der jeweiligen Sequenz 4a-d erlaubt und der Server 1 dazu eingerichtet ist, eine Sequenz 4a-d des Sequenzbestands 9 basierend auf den der Sequenz 4a-d zugeordneten Sequenzkennzeichen 10a-i zu modifizieren und/oder eine funktionale Abhängigkeit zwischen den Parametern 6a-f von parametrisierten Prozessschritten 5a-f der Sequenz 4a-d einzufügen und/oder eine Kontrollstruktur 25 innerhalb der Sequenz 4a-d einzufügen.

Unter einer funktionalen Abhängigkeit zwischen parametrisierten Prozessschritten 5a-f ist zu verstehen, dass der Parametersatz 7a-f etwa eines späteren Prozessschrittes 5a-f von dem Parametersatz 7a-f eines vorangehenden Prozessschrittes 5a-f abhängig ist. Dabei kann es sich auch um einen während der Ausführung des vorangehenden Prozessschrittes 5a-f ermittelten Messwert handeln. Zum Beispiel kann ein späterer Prozessschritt 5a-f einen zumindest hinsichtlich eines einzelnen Parameters unterschiedlichen Parametersatz 7a-f vorsehen, je nach dem ermittelten Nässegrad eines Bodens in einem vorangegangenen Prozessschritt 5a-f. Eine andere Abhängigkeit kann etwa auf das in einem vorherigen Prozessschritt 5a-f ermittelte Gewicht einer bestimmten Erntemenge bezogen sein. Auf diese Weise kann innerhalb einer einzelnen Sequenz 4a-d auf eine gewisse Variabilität Rücksicht genommen werden.

Unter einer Kontrollstruktur 25 in dem hier gegenständlichen Sinne ist etwa eine Abzweigung wie bei einer if-Abfrage - also einer bedingten Anweisung - einer Programmiersprache zu verstehen. Das ist insbesondere in der Fig. 2 abgebildet. Dort ist erkennbar, dass eine Kontrollstruktur 25 nach dem Prozessschritt 5c entweder den Prozessschritt 5d oder den Prozessschritt 5e vorsieht. Das Ergebnis dieser Abfrage kann wiederum von einem in einem der vorherigen Prozessschritte 5a-c bestimmten Messwert abhängig sein. Nach dem Prozessschritt 5d oder dem Prozessschritt 5e wird gemäß der Darstellung der Fig. 2 in jedem Falle als nächstes der Prozessschritt 5f ausgeführt.

Der Server 1 kann nun mit einer bestimmten Logik ausgestattet sein, welcher aus einer Vielzahl von Sequenzen 4a-d des Sequenzbestands 9 Abhängigkeiten dieser Art ermittelt und diese dazu einsetzt, die beschriebenen funktionalen Abhängigkeiten oder Kontrollstrukturen 25 in Sequenzen 4a-d vorzusehen. Es handelt sich hier also um einen weiteren Lerneffekt des Systems, welcher hier durch den Server 1 implementiert wird. Die Sequenzkennzeichen 10a-i, auf welchen die Modifikation oder das Einfügen der funktionalen Abhängigkeit oder der Kontrollstruktur 25 basiert, sind bevorzugt die Ergebnismetriken 17a-c.

Wie bereits beschrieben, erfolgt auf die beschriebenen Arten eine kontinuierliche Ergänzung und Verbesserung des Sequenzbestands 9 des Servers 1. Neben dem bereits beschriebenen Herunterladen von Sequenzen 4a-d durch den Client 13a-d, in welchem der Client 13a-d eine Verbindung 14 zum Server 1 herstellt und gemäß dem Auswahlkriterium 15 Sequenzen 4a-d anfordert, kann aber auch der Server 1 proaktiv einen bekannten Client 13a-d über für diesen möglicherweise interessante Sequenzen 4a-d informieren. Dabei ist bevorzugt vorgesehen, dass der Server 1 dazu eingerichtet ist, einen Clienteintrag 25a,b in die Datenbank 8 aufzunehmen, welcher Clienteintrag 25a,b eine Teilnehmerkennung 18a-c und ein - nicht dargestelltes - Client-Auswahlkriterium umfasst sowie dazu eingerichtet ist, basierend auf einem Vergleich des Client-Auswahlkriteriums mit Sequenzkennzeichen 10a-i der Sequenzen 4a-d des Sequenzbestands 9 eine Benachrichtigung an einen der Teilnehmerkennung 18a-c zugeordneten Client 13a-d über die Netzwerkschnittstelle 11 zu übertragen. Der Übersichtlichkeit halber sind in der Fig. 3 die Client-Einträge 25a,b außerhalb der Datenbank 8 dargestellt.

Bei diesem Clientauswahlkriterium kann es sich um ein von dem Client 13a-d durch den Server 1 empfangenes Auswahlkriterium 15 handeln und hier speziell um das zuletzt empfangene Auswahlkriterium 15 oder um ein als Clientauswahlkriterium speziell gekennzeichnetes Auswahlkriterium 15. Es handelt sich also um ein Auswahlkriterium 15, bei welchem der Client 13a-d eine fortlaufende Unterrichtung wünscht. Dieser Vergleich des Client-Auswahlkriteriums mit dem Sequenzkennzeichen 10a-i kann insbesondere den Vergleich mit den Sequenzkennzeichen 10a-i neu aufgenommener oder modifizierter Sequenzen 4a-d des Sequenzbestands 9 umfassen. Es werden also speziell diejenigen Sequenzen 4a-d des Sequenzbestands 9 untersucht, welche zu einem vorherigen Zeitpunkt in dieser Form noch nicht in der Datenbank 8 vorhanden war.

Weiter ist bevorzugt vorgesehen, dass jeder Teilnehmerkennung 18a,b der Client-Einträge 25a,b ein vorzugsweise zeitgebundener, Berechtigungsstatus 26a,b zugeordnet ist und dass das empfangene Auswahlkriterium 15 eine Teilnehmerkennung 18a,b umfasst und der Server 1 dazu eingerichtet ist, entweder das Übertragen der Benachrichtigung und/oder das Bestimmen der Auswahlliste 19 vorzugsweise auch das Sortieren der Auswahlliste 19 und/oder das Übertragen der bestimmten Verlaufsdaten und/oder das Übertragen der bestimmten Sequenz 4a-d und/oder das Hinzufügen einer benutzerdefinierten Sequenz 4a-d auch basierend auf dem Berechtigungsstatus 26a,b durchzuführen, welcher der Teilnehmerkennung 18a,b des empfangenen Auswahlkriteriums 15 zugeordnet ist.

Mit anderen Worten werden alle vorher beschriebenen vorschlagsgemäßen oder bevorzugten Funktionalitäten, welcher der Server 1 gegenüber dem Client 13a-d bietet, nicht für alle Clients 13a-d in jedem Falle gleich ausgeführt, sondern es wird eine Unterscheidung je nach Berechtigung und damit Zugriffsmöglichkeit vorgenommen. Diese Unterscheidung kann unter Berücksichtigung des Berechtigungsstatus 26a,b auf grundsätzlich beliebige Art und Weise erfolgen, welche dazu führt, dass dasselbe Auswahlkriterium 15, je nachdem, welcher Berechtigungsstatus 26a,b der Teilnehmerkennung 18a-c des Clients 13a-d zugewiesen ist, zu einem anderen Ergebnis führt. Die Zeitgebundenheit des Berechtigungsstatus 26a,b im vorliegenden Sinne bedeutet, dass ein solcher Berechtigungsstatus automatisch - also durch den Server 1 bewirkt - nach einer vorbestimmten Zeit eine Veränderung erfahren kann.

Eine besondere Ausgestaltung hiervon sieht vor, dass der zugeordnete Berechtigungsstatus 26a,b eine Vollberechtigung 27, eine Zeitberechtigung oder eine Nichtberechtigung 28 sein kann und der Server 1 dazu eingerichtet ist, die oben beschriebenen, gemäß dem Berechtigungsstatus 26a,b durchzuführenden Funktionen, im Falle einer Nichtberechtigung 28 zu blockieren. Das bedeutet, dass diese Funktionen bei einer Nichtberechtigung 28 prinzipiell nicht zur Verfügung stehen.

Bevorzugt ist weiter, dass der Server 1 dazu eingerichtet ist, nach Ablauf einer vorbestimmten Berechtigungszeit eine Zeitberechtigung zu einer Nichtberechtigung 28 zu ändern und dazu eingerichtet ist, eine Nichtberechtigung 28 oder eine Zeitberechtigung zu einer Vollberechtigung 27 zu ändern, wenn eine der Teilnehmerkennung 18a-c, welcher die Nichtberechtigung 28 oder die Zeitberechtigung zugeordnet ist, zugeordnete Vollberechtigungsnachricht empfangen wird.

Es kann also vorgesehen sein, einem beliebigen Client 13a-d zunächst eine Teilberechtigung zuzuweisen, welche möglicherweise eine eingeschränkte Funktionalität des Servers 1 bietet und diese nach Ablauf einer grundsätzlich frei wählbaren Berechtigungszeit in eine Nichtberechtigung 28 umzuwandeln, in welcher diese Funktionalität nicht mehr zur Verfügung gestellt wird, aber sowohl vor als auch nach Ablauf der Berechtigungszeit den möglichen Übergang zu einer Vollberechtigung 27 vorzusehen, wenn die entsprechende Vollberechtigungsnachricht empfangen wird. Diese Nachricht kann eine beliebige, zweckmäßigerweise erkennbar autorisierte an den Server 1 gerichtete Nachricht sein, die das Gewähren einer Vollberechtigung 27 bestätigt.

Die Berücksichtigung des Berechtigungsstatus ist in der Fig. 3 kurz umrissen, wo das Auswahlkriterium 15 neben dem Sequenzkennzeichen 10i auch die Teilnehmerkennung 18a umfasst. Der Clienteintrag 25a weist nun aus, dass der Teilnehmerkennung 18a eine Vollberechtigung 27 zugeordnet ist. Folglich führt der Server 1 das Bestimmen der Sequenz 4a aus dem Sequenzbestand 9 aus und überträgt diese Sequenz 4a an den Client 13a über den Datenkanal 14. Ein anderer Clienteintrag 25b zu einem Client 13b weist einer anderen Teilnehmerkennung 18b den Berechtigungsstatus 26b einer Nichtberechtigung 28 zu. Entsprechend wäre bei Empfang eines Auswahlkriteriums 15 mit dieser Teilnehmerkennung 18b die Übertragung der Sequenz 4a an den Client 13b blockiert worden.

Mögliche Ausgestaltungen eines Client 13a-d, mit dem ein Datenkanal 14 gemäß dem Vorschlag zu dem Server 1 hergestellt werden kann und mit dem die obenstehend beschriebenen Funktionalitäten wahrgenommen werden können, umfassen grundsätzlich alle netzwerkfähigen und insbesondere internetfähigen elektronischen Geräte. Ein stationärer, als Hof-Personalcomputer 16a bezeichneter Rechner wurde in diesem Zusammenhang bereits als Client 13c in diesem Sinne beschrieben, es sind aber auch Mobiltelefone, Smartphones, Notebooks allgemein und Tablet-PCs im Besonderen sowie alle anderen vergleichbaren Vorrichtungen hier gemeint. In der Fig. 1 ist stellvertretend für diese ein mobiles Endgerät 16b als weiterer Client 13d dargestellt, der hier beispielhaft ebenfalls über die Basisstation 23b mit dem Internet 12a verbunden ist.

Die von dem Server 1 übertragenen Daten und insbesondere die Sequenzen können dann, wenn sie etwa gemäß der HyperText Markup Language (HTML) formatiert sind, in einem herkömmlichen Browser dargestellt werden. Um die von dem Server 1 übertragenen Daten sowohl darstellen als auch bearbeiten und ggf. diese bearbeiteten oder selbst erzeugte Daten wieder an den Server 1 übertragen zu können, kann auf dem Client 13a-d eine spezielle Software vorgesehen sein, welche auch als Sequenzverwaltungsprogramm bezeichnet werden kann. Bei einem solchen Sequenzverwaltungsprogramm kann es sich um eine App handeln, welche dementsprechend von einer einschlägigen Internetseite bezogen werden kann.

Auf diese Weise wird es möglich, auf den Sequenzbestand 9 des Servers 1 auch dann zuzugreifen, wenn keine unmittelbare Ausführung des einer Sequenz 4a-d vorgesehen oder möglich ist, da ein wie oben beschriebenes mobiles Endgerät 16b in der Regel keine Schnittstelle zu Arbeitsgeräten 6a-f einer landwirtschaftlichen Arbeitsmaschine 2a,b aufweisen wird. Nichtsdestotrotz kann ein solcher Zugriff etwa dann sinnvoll sein, wenn ein Lohnunternehmer Sequenzen 4a-d oder Verlaufsdaten seiner Mitarbeiter oder seiner landwirtschaftlichen Arbeitsmaschine 2a,b kontrollieren möchte. Insbesondere Erträge in Form von Tonnage pro Stunde oder sonstige Produktivitätsmerkmale lassen sich auf diese Weise ermitteln und vergleichen.

Andererseits können von einem solchen mobilen Endgerät 16b heruntergeladene Sequenzen 4a-d auch über eine passende Schnittstelle auf die landwirtschaftliche Arbeitsmaschine 2a,b zur Ausführung übertragen werden. Alternativ kann über einen Adapter eine direkte Ansteuerung der Arbeitsgeräte 6a-f der landwirtschaftlichen Arbeitsmaschine 2a,b ermöglicht werden.

Vorschlagsgemäßer Gegenstand seitens eines Clients in Bezug zu dem Server 1 ist speziell eine Kontrollvorrichtung zur Verarbeitung von Sequenzen 4a-d für landwirtschaftliche Arbeitsmaschinen 2a,b,3a,b, wobei die Sequenzen 4a-d jeweils eine Abfolge von parametrisierten Prozessschritten 5a-f von Arbeitsgeräten 6a-f einer landwirtschaftlichen Arbeitsmaschine 2a,b,3a,b umfassen. Eine solche vorschlagsgemäße Kontrollvorrichtung umfasst einen Client 13a,b mit einer Maschinenschnittstelle 29 zur Ansteuerung der Arbeitsgeräte 6a-f für die Ausführung der Prozessschritte 5a-f sowie eine Netzwerkschnittstelle 30 zu einem globalen Kommunikationsnetzwerk 12,12a, welche Netzwerkschnittstelle 30 dazu eingerichtet ist, einen, vorzugsweise verbindungsorientierten, bidirektionalen Datenkanal 14 zwischen dem Client 13a,b und einem Server 1 herzustellen. Der Client 13a,b umfasst vorschlagsgemäß ferner eine Bedienschnittstelle 31 zur Anzeige und Bearbeitung von Prozessschritten 5a-f und Sequenzen 4a-d, wobei der Client 13a,b dazu eingerichtet ist, ein Auswahlkriterium 15 an den Server 1 über den Datenkanal 14 zu übertragen, eine Sequenz 4a-d von dem Server 1 über den Datenkanal 14 zu empfangen und die empfangene Sequenz 4a-d mittels der Maschinenschnittstelle 29 auszuführen.

Der Client 13a,b ist also auf der Seite der landwirtschaftlichen Arbeitsmaschine 2a,b,3a,b vorgesehen, wobei es sich bei dem Client 13a,b etwa um ein elektronisches Gerät handeln kann, welches entweder fest eingebaut in der landwirtschaftlichen Arbeitsmaschine 2a,b,3a,b vorgesehen ist oder aber auf geeignete Weise mit diesem datentechnisch verbunden wird. Die Maschinenschnittstelle 29 stellt also die Möglichkeit für den Client 13a,b dar, auf die Arbeitsgeräte 6a-f der landwirtschaftlichen Arbeitsmaschine 2a,b,3a,b steuernd einzuwirken. Mit anderen Worten kann der Client 13a-b diese Ansteuerung selber direkt vornehmen und ist nicht darauf angewiesen, dass ein Bediener etwa von dem Client 13a-b an der Bedienschnittstelle 31 grafisch oder sonst wie ausgegebene Anweisungen aufnimmt und sie manuell ausführt. Bei der Netzwerkschnittstelle 30 kann es sich um eine beliebige, vorzugsweise eine Funkschnittstelle handeln, die die Kommunikation mit dem globalen Kommunikationsnetzwerk 12,12 ermöglicht. Die soeben beschriebenen Zusammenhänge sind auch in der Fig. 3 dargestellt, wobei der Übersichtlichkeit halber auf die Darstellung einer spezifischen Verbindung zwischen der Maschinenschnittstelle 29 und den Arbeitsgeräten 6a-f verzichtet wurde.

Ein Client 13a-d im vorliegenden Sinne kann, analog zu dem Server 1, auch eine Vielzahl zusammenwirkender elektronischer Geräte umfassen, welche dann insgesamt den Client 13a-d im vorliegenden Sinne bilden. Ferner kann ein von dem Client 13a-d auszuführender Vorgang durchaus von einem Bediener veranlasst werden, so etwa über die genannte Bedienschnittstelle 31. Andererseits können die Vorgänge des Clients 13a-d auch automatisch, also ohne äußere Veranlassung, vonstattengehen. So könnte etwa das Übertragen des Auswahlkriteriums 15 an den Server 1 über den Datenkanal 14 mit dem anschließenden Empfangen einer Sequenz 4a-d von dem Server 1 über den Datenkanal 14 automatisch in einem vorgegebenen Zeitabstand erfolgen. Auf diese Weise könnte also der Client 13a-d selbständig bei dem Server 1 nachfragen, ob neue, dem Auswahlkriterium 15 entsprechende Sequenzen 4a-d im Sequenzbestand 9 des Servers 1 vorhanden sind. Diese Automatisierung kann auch die weiteren, vorliegend beschriebenen Vorgänge im Client 13a-d betreffen.

Bevorzugt ist der Client 13a-b dazu eingerichtet, in einem - nicht dargestellten - Clientspeicher Sequenzen 4a-d sowie ausgeführte Prozessschritte 5a-f zu hinterlegen. Bevorzugt ist in diesem Zusammenhang die Bedienschnittstelle 31 dazu eingerichtet, hinterlegte Sequenzen 4a-d und hinterlegte Prozessschritte 5a-f anzuzeigen und basierend auf einer Bedienereingabe eine Bedienersequenz aus den hinterlegten Sequenzen 4a-d und den hinterlegten Prozessschritten 5a-f zu erzeugen, wobei der Client 13a-b weiter dazu eingerichtet ist, die Bedienersequenz an den Server 1 über den Datenkanal 14 zu übertragen.

Die Fig. 4 zeigt die Darstellung durch die Bedienschnittstelle 31 einer Bedienersequenz, welche der Sequenz 4a mit den bereits beschriebenen Prozessschritten 5a-f entspricht. Ebenso dargestellt wird der Parametersatz 7b des zweiten Prozessschritts 5b entsprechend einem Häckseln. Der Bediener des Client 13a,b hat nun die Möglichkeit, diese Sequenz 4a insgesamt oder speziell die Prozessschritte 5a-f der Sequenz 4a zu bearbeiten und auf diese Weise oder durch eine neue Kombination hinterlegter Prozessschritte 5a-f eine neue Sequenz, hier als Bedienersequenz bezeichnet, zu erzeugen. Diese kann dann an den Server 1 übertragen werden und steht damit, ebenso wie die anderen Sequenzen 4a-d des Sequenzbestands 9, wie obenstehend beschrieben auch anderen Clients 13a-c mittels des Server 1 zur Verfügung. Dabei kann der Client 13a,b insbesondere der Bedienersequenz Sequenzkennzeichnen 10a-i zuordnen, wobei dann die Bedienersequenz mit dem Sequenzkennzeichen 10a-i an den Server 1 über den Datenkanal 14 übertragen wird. Die Sequenzkennzeichen 10a-i können sich etwa automatisch aus den einzelnen Prozessschritten 5a-f der Sequenz 4a bzw. ihren Parametersätzen 7a-f ergeben, insbesondere wenn es um eine Funktionseigenschaft wie den Arbeitsgerätetyp für einen bestimmten Prozessschritt 5a-f geht. Sie können aber auch durch den Bediener festgelegt werden oder sich aus der Identität des Bedieners ergeben, worunter beispielsweise eine Teilnehmerkennung 18a-c als Sequenzkennzeichen 10a-i dieser Bedienersequenz zu verstehen ist.

Als Weiterbildung der vorschlagsgemäßen Kontrollvorrichtung kann auch ein selbstlernender Client 13a,b vorgesehen sein, welcher sich dadurch auszeichnet, dass er dazu eingerichtet ist, basierend auf ausgeführten Prozessschritten 5a-f und auf ausgeführten Sequenzen 4a-d eine Vorschlagssequenz zu erzeugen. Es kann also auch clientseitig eine Logik vorgesehen sein, die ausgeführte Sequenzen 4a-d analysiert und gemäß einer Mustererkennung aus diesen Vorschlagssequenzen erzeugt. Bevorzugt wird diesen Vorschlagssequenzen ein Sequenzkennzeichen 10a-i zugewiesen und die Vorschlagssequenz wird mit dem Sequenzkennzeichen 10a-i an den Server 1 über den Datenkanal 14 übertragen. Bezüglich des Sequenzkennzeichens 10a-i der Vorschlagssequenz gelten die Feststellungen zu den Sequenzkennzeichen 10a-i der Bedienersequenz.

Das Erzeugen der Vorschlagssequenz kann vorzugsweise basierend auf wiederholt ausgeführten Prozessschritten 5a-f und hier insbesondere auf wiederholt ausgeführten Prozessschritten 5a-f mit identischen Parametersätzen 7a-f basierend. Mit anderen Worten wird also eine Vorschlagssequenz erstellt, wenn festgestellt wird, dass eine feste Abfolge von vielleicht sogar identischen Prozessschritten 5a-f wiederholt ausgeführt wird.

Schließlich wird bei einer vorschlagsgemäßen Kontrollvorrichtung bevorzugt, dass das Auswahlkriterium 15 eine Teilnehmerkennung 18a-c umfasst und dass der Client 13a,b eine Empfangsschnittstelle aufweist, welche identisch zu der Netzwerkschnittstelle 30 sein kann, und der Client 13a,b dazu eingerichtet ist, über die Empfangsschnittstelle eine Benachrichtigung von dem Server 1 zu empfangen und basierend auf der empfangenen Benachrichtigung den Datenkanal 14 zum Server 1 herzustellen und eine der Benachrichtigung zugeordnete Steuerungssequenz 4a-d vom Server 1 über den Datenkanal 14 zu empfangen. Auf diese Weise hat der Client 13a,b die Möglichkeit, auf die von dem Server 1 versandten Benachrichtigungen zu reagieren.

Weitere bevorzugte Ausführungsformen ergeben sich aus den bevorzugten ausführungsformen des vorschlagsgemäßen Serversystems.

Vorschlagsgemäß ist ferner ein Verfahren zur Verwaltung von Sequenzen für landwirtschaftliche Arbeitsmaschinen in einem Server, wobei die Sequenzen jeweils eine Abfolge von parametrisierten Prozessschritten von Arbeitsgeräten einer landwirtschaftlichen Arbeitsmaschine umfassen, mit den folgenden Schritten: Annehmen einer Verbindungsanfrage eines Clients über ein globales Kommunikationsnetzwerk, Herstellen eines, vorzugsweise verbindungsorientierten, bidirektionalen Datenkanals zwischen dem Server und dem Client über das globale Kommunikationsnetzwerk, Empfangen eines Auswahlkriteriums von dem Client über den Datenkanal, Bestimmen einer Sequenz aus einem Sequenzbestand einer Datenbank des Servers basierend auf einem Vergleich des Auswahlkriteriums mit Sequenzkennzeichen der Sequenzen des Sequenzbestands und Übertragen der bestimmten Sequenz an den Client über den Datenkanal.

Ebenso vorschlagsgemäß ist ein Verfahren zur Bereitstellung von Sequenzen für eine landwirtschaftliche Arbeitsmaschine in einem Client, wobei die Sequenzen jeweils eine Abfolge von parametrisierten Prozessschritten von Arbeitsgeräten der landwirtschaftlichen Arbeitsmaschine umfassen, mit den folgenden Schritten: Herstellen eines, vorzugsweise verbindungsorientierten, bidirektionalen Datenkanals zwischen dem Server und dem Client über ein globales Kommunikationsnetzwerk, Übertragen eines Auswahlkriteriums an den Server über den Datenkanal, Empfangen einer Sequenz von dem Server über den Datenkanal, Ausführen der empfangenen Sequenz mittels einer Maschinenschnittstelle zur Ansteuerung der Arbeitsgeräte.

## Patentansprüche

1. Serversystem zur Verwaltung von Sequenzen (4a-d) für landwirtschaftliche Arbeitsmaschinen (2a,b,3a,b), wobei die Sequenzen (4a-d) jeweils eine Abfolge von parametrisierten Prozessschritten (5a-f) von Arbeitsgeräten (6a-f) einer landwirtschaftlichen Arbeitsmaschine (2a,b,3a,b) umfassen, umfassend einen Server (1) mit einer Datenbank (8), in welcher ein Sequenzbestand (9) von Sequenzen (4a-d) hinterlegt ist, wobei den Sequenzen (4a-d) des Sequenzbestands (9) jeweils Sequenzkennzeichen (10a-i) zugewiesen sind, wobei die Sequenzkennzeichen (10a-i) einen oder mehrere Prozessschritte (5a-f) der jeweiligen Sequenz (4a-d) beschreiben, mit einer Netzwerkschnittstelle (11) zu einem globalen Kommunikationsnetzwerk (12,12a), welche Netzwerkschnittstelle (11) dazu eingerichtet ist, Verbindungsanfragen eines Clients (13a-d) anzunehmen und einen, vorzugsweise verbindungsorientierten, bidirektionalen Datenkanal (14) zwischen dem Server (1) und dem Client (13a-d) herzustellen, wobei der Server (1) dazu eingerichtet ist, ein Auswahlkriterium (15) von dem Client (13a-d) über den Datenkanal (14) zu empfangen, eine Sequenz (4a) aus dem Sequenzbestand (9) basierend auf einem Vergleich des Auswahlkriteriums (15) mit den Sequenzkennzeichen (10a-i) der Sequenzen (4a-d) des Sequenzbestands (9) zu bestimmen und die bestimmte Sequenz (4a) an den Client (13a-d) über den Datenkanal (14) zu übertragen.

2. Serversystem nach Anspruch 1, **dadurch gekennzeichnet, dass** die Sequenzkennzeichen (10a-i) eine Funktionseigenschaft, vorzugsweise einen Arbeitsgerätetyp, insbesondere eine Arbeitsgeräteidentifikation, und/oder eine Parametereinstellung eines Arbeitsgeräts (6a-f) und/oder eine Sensoreinstellung und/oder eine Einsatzumgebungseigenschaft, vorzugsweise Sensordaten, und/oder ein Arbeitsergebnis, vorzugsweise eine Ergebnismetrik (17a-c), und/oder eine Teilnehmerkennung (18a-c), vorzugsweise eine Personenidentifikation und/oder eine Client-Identifikation, umfassen.

3. Serversystem nach Anspruch 1 oder 2, **dadurch gekennzeichnet, dass** der Server (1) dazu eingerichtet ist, eine bedienergenerierte Sequenz (4a-d), welcher ein Sequenzkennzeichen (10a-i) zugewiesen ist, von einem Client (13a-d) über den Datenkanal (14) zu empfangen und dem Sequenzbestand (9) hinzuzufügen.

4. Serversystem nach einem der Ansprüche 1 bis 3, **dadurch gekennzeichnet, dass** in der Datenbank (8) ein Verlaufsbestand von landwirtschaftlichen Verlaufsdaten, welche vorzugsweise eine Einsatzumgebungseigenschaft und/oder ein Arbeitsergebnis umfassen, hinterlegt ist, welchen Verlaufsdaten jeweils ein Verlaufskennzeichen zugeordnet ist, vorzugsweise, welchen Verlaufsdaten jeweils eine Sequenz (4a-d) des Sequenzbestands (9) zugewiesen ist, und **dadurch gekennzeichnet, dass** der Server (1) dazu eingerichtet ist, ein Verlaufskriterium, vorzugsweise umfassend eine Teilnehmerkennung (18a-c), von dem Client (13ad) über den Datenkanal (14) zu empfangen, Verlaufsdaten aus dem Verlaufsbestand basierend auf einem Vergleich des Verlaufskriteriums mit den Verlaufskennzeichen des Verlaufsbestands zu bestimmen und die bestimmten Verlaufsdaten an den Client (13a-d) über den Datenkanal (14) zu übertragen.

5. Serversystem nach einem der Ansprüche 1 bis 4, **dadurch gekennzeichnet, dass** das Auswahlkriterium (14) ein Sequenzkennzeichen (9a-i) und insbesondere eine Funktionseigenschaft, vorzugsweise einen Arbeitsgerätetyp, weiter insbesondere eine Arbeitsgeräteidentifikation, und/oder eine Parametereinstellung eines Arbeitsgeräts und/oder eine Sensoreinstellung und/oder eine Einsatzumgebungseigenschaft, vorzugsweise Sensordaten, und/oder ein Arbeitsergebnis, vorzugsweise eine Ergebnismetrik (17a-c), und/oder eine Teilnehmerkennung (18ac), vorzugsweise eine Personenidentifikation und/oder eine Client-Identifikation, umfasst.

6. Serversystem nach Anspruch 5, **dadurch gekennzeichnet, dass** der Server (1) dazu eingerichtet ist, eine Auswahlliste (19) von Sequenzen (4a-d) aus dem Sequenzbestand (9) basierend auf einem Vergleich des empfangenen Auswahlkriteriums (15) mit Sequenzkennzeichen (10i-1) der Sequenzen (4a-d) des Sequenzbestands zu (9) bestimmen, vorzugsweise, basierend auf einem Vergleich, insbesondere einer Gemeinsamkeit, eines Arbeitsgerätetyps und/oder einer Einsatzumgebungseigenschaft, eine Übersicht zur Auswahlliste zu erzeugen und die Übersicht an den Client (13a-d) über den Datenkanal (14) zu übertragen.

7. Serversystem nach Anspruch 6, **dadurch gekennzeichnet, dass** die Auswahlliste (19) gemäß einer Reihenfolge sortiert ist, wobei die Reihenfolge auf einem weiteren Sequenzkennzeichen (10a-i), vorzugsweise umfassend eine Ergebnismetrik (17a-c), basiert, insbesondere, wobei das weitere Sequenzkennzeichen (10a-i) von dem Auswahlkriterium (15) umfasst ist.

8. Serversystem nach einem der Ansprüche 1 bis 7, **dadurch gekennzeichnet, dass** die Sequenzen (4a-d) gemäß einer Sequenzsyntax formatiert sind, wobei die Sequenzsyntax funktionale Abhängigkeiten zwischen parametrisierten Prozessschritten (6a-f) und/oder Kontrollstrukturen (25) innerhalb der jeweiligen Sequenz (4a-d) erlaubt und der Server (1) dazu eingerichtet ist eine Sequenz (4a-d) des Sequenzbestands (9) basierend auf den der Sequenz (4a-d) zugeordneten Sequenzkennzeichen (10a-i), insbesondere den Ergebnismetriken (17a-c), und/oder basierend auf den der Sequenz (4a-d) zugeordneten Verlaufsdaten, zu modifizieren, insbesondere einen Parametersatz (7a-f) eines parametrisierten Prozessschrittes (5a-f) zu modifizieren, und/oder eine funktionale Abhängigkeit zwischen den Parametersätzen (7a-f) von parametrisierten Prozessschritten (5a-f) der Sequenz (4a-d) einzufügen und/oder eine Kontrollstruktur (25) innerhalb der Sequenz (4a-d) einzufügen.

9. Serversystem nach einem der Ansprüche 1 bis 8, **dadurch gekennzeichnet, dass** der Server (1) dazu eingerichtet ist, einen Client-Eintrag (25a,b) in die Datenbank (8) aufzunehmen, welcher Client-Eintrag (25a,b) eine Teilnehmerkennung (18a-c) und ein Client-Auswahlkriterium umfasst, sowie dazu eingerichtet ist, basierend auf einem Vergleich des Client-Auswahlkriteriums mit Sequenzkennzeichen (10a-i) der Sequenzen (4a-d) des Sequenzbestands (9), vorzugsweise, basierend auf einem Vergleich des Client-Auswahlkriteriums mit Sequenzkennzeichen (10a-i) neu aufgenommener oder modifizierter Sequenzen (4a-d) des Sequenzbestands (9), eine Benachrichtigung an einen der Teilnehmerkennung (18a-c) zugeordneten Client (13a-d) über die Netzwerkschnittstelle (11) zu übertragen.

10. Serversystem nach Anspruch 9, **dadurch gekennzeichnet, dass** jeder Teilnehmerkennung (18a,b) der Client-Einträge (25a,b) ein, vorzugsweise zeitgebundener, Berechtigungsstatus (26a,b) zugeordnet ist und dass das empfangene Auswahlkriterium (15) eine Teilnehmerkennung (18a,b) umfasst und der Server (1) dazu eingerichtet ist, das Übertragen der Benachrichtigung und/oder das Bestimmen der Auswahlliste (19), vorzugsweise auch das Sortieren der Auswahlliste (19), und/oder das Übertragen der bestimmten Verlaufsdaten und/oder das Übertragen der bestimmten Sequenz (4a-d) und/oder das Hinzufügen einer benutzergenerierten Sequenz (4a-d) auch basierend auf dem Berechtigungsstatus (26a-b) durchzuführen, welcher der Teilnehmerkennung (18a,b) des empfangenen Auswahlkriteriums (15) zugeordnet ist.

11. Serversystem nach Anspruch 10, **dadurch gekennzeichnet, dass** der zugeordnete Berechtigungsstatus (26a,b) eine Vollberechtigung (27), eine Zeitberechtigung oder eine Nichtberechtigung (28) sein kann und der Server (1) dazu eingerichtet ist, das Übertragen der Benachrichtigung und/oder das Bestimmen der Auswahlliste (19), vorzugsweise auch das Sortieren der Auswahlliste (19), und/oder das Übertragen der bestimmten Verlaufsdaten und/oder das Übertragen der bestimmten Sequenz (4a-d) und/oder das Hinzufügen einer benutzergenerierten Sequenz (4a-d) im Falle einer Nichtberechtigung (28) zu blockieren, insbesondere, wobei der Server (1) dazu eingerichtet ist, nach Ablauf einer vorbestimmten Berechtigungszeit eine Zeitberechtigung zu einer Nichtberechtigung (28) zu ändern und dazu eingerichtet ist, eine Nichtberechtigung (28) oder eine Zeitberechtigung zu einer Vollberechtigung (27) zu ändern, wenn eine der Teilnehmerkennung (18a-c), welcher die Nichtberechtigung (28) oder die Zeitberechtigung zugeordnet ist, zugeordnete Vollberechtigungsnachricht empfangen wird.

12. Kontrollvorrichtung zur Verarbeitung von Sequenzen für landwirtschaftliche Arbeitsmaschinen (2a,b,3a,b), wobei die Sequenzen (4a-d) jeweils eine Abfolge von parametrisierten Prozessschritten (5a-f) von Arbeitsgeräten (6a-f) einer landwirtschaftlichen Arbeitsmaschine (2a,b,3a,b) umfassen, wobei die Kontrollvorrichtung einen Client (13a,b) mit einer Maschinenschnittstelle (29) zur Ansteuerung der Arbeitsgeräte (6a-f) für die Ausführung der Prozessschritte (5a-f), eine Netzwerkschnittstelle (30) zu einem globalen Kommunikationsnetzwerk (12,12a), welche Netzwerkschnittstelle (30) dazu eingerichtet ist, einen, vorzugsweise verbindungsorientierten, bidirektionalen Datenkanal (14) zwischen dem Client (13a,b) und einem Server (1) herzustellen, und eine Bedienschnittstelle (31) zur Anzeige und Bearbeitung von Prozessschritten (5a-f) und Sequenzen (4a-d) umfasst, wobei der Client (13a,b) dazu eingerichtet ist, ein Auswahlkriterium (15) an den Server (1) über den Datenkanal (14) zu übertragen, eine Sequenz (4a-d) von dem Server (1) über den Datenkanal (14) zu empfangen und die empfangene Sequenz (4a-d) mittels der Maschinenschnittstelle (29) auszuführen.

13. Kontrollvorrichtung nach Anspruch 12, **dadurch gekennzeichnet, dass** der Client (13a-b) dazu eingerichtet ist, in einem Clientspeicher Sequenzen (4a-d) sowie ausgeführte Prozessschritte (5a-f) zu hinterlegen und die Bedienschnittstelle (31) dazu eingerichtet ist, hinterlegte Sequenzen (4a-d) und hinterlegte Prozessschritte (5a-f) anzuzeigen und basierend auf einer Bedienereingabe eine Bediener-Sequenz aus den hinterlegten Sequenzen (4a-d) und den hinterlegten Prozessschritten (5a-f) zu erzeugen, wobei der Client (13a,b) weiter dazu eingerichtet ist, die Bediener-Sequenz an den Server (1) über den Datenkanal (14) zu übertragen, vorzugsweise, der Bediener-Sequenz ein Sequenzkennzeichen (10a-i) zuzuordnen und die Bediener-Sequenz mit dem Sequenzkennzeichen (10a-i) an den Server (1) über den Datenkanal (14) zu übertragen.

14. Kontrollvorrichtung nach Anspruch 12 oder 13, **dadurch gekennzeichnet, dass** der Client (13a,b) dazu eingerichtet ist, basierend auf ausgeführten Prozessschritten (5a-f) und auf ausgeführten Sequenzen (4a-d), vorzugsweise, basierend auf wiederholt ausgeführten Prozessschritten (5a-f), insbesondere mit identischen Parametersätzen (7a-f), eine Vorschlagssequenz zu erzeugen, vorzugsweise, der Vorschlagssequenz ein Sequenzkennzeichen (10a-i) zuzuweisen und die Vorschlagssequenz mit dem Sequenzkennzeichen (10a-i) an den Server (1) über den Datenkanal (14) zu übertragen.

15. Kontrollvorrichtung nach einem der Ansprüche 12 bis 14, **dadurch gekennzeichnet, dass** das Auswahlkriterium (15) eine Teilnehmerkennung (18a-c) umfasst und dass der Client (13a,b) eine Empfangsschnittstelle aufweist und dazu eingerichtet ist, über die Empfangsschnittstelle eine Benachrichtigung von dem Server (1) zu empfangen und basierend auf der empfangenen Benachrichtigung den Datenkanal (14) zum Server (1) herzustellen und eine der Benachrichtigung zugeordnete Steuerungssequenz (4a-d) vom Server (1) über den Datenkanal (14) zu empfangen.
